(19) Europäisches Patentamt

European Patent Office

Office européen des brevets

(11) **EP 1 225 688 B1**

(12) **EUROPÄISCHE PATENTSCHRIFT**

(45) Veröffentlichungstag und Bekanntmachung des Hinweises auf die Patenterteilung:
**26.04.2006 Patentblatt 2006/17**

(51) Int Cl.:
***H02P 21/00*** *(2006.01)*

(21) Anmeldenummer: **02000663.1**

(22) Anmeldetag: **11.01.2002**

(54) **Verfahren zur Regelung und Umrichter zur Durchführung des Verfahrens**

Control method and converter for performing the process

Méthode de commande et convertisseur pour mise en oeuvre du procédé

(84) Benannte Vertragsstaaten:
**AT BE CH CY DE DK ES FI FR GB GR IE IT LI LU MC NL PT SE TR**

(30) Priorität: **23.01.2001 DE 10122295**

(43) Veröffentlichungstag der Anmeldung:
**24.07.2002 Patentblatt 2002/30**

(73) Patentinhaber: **Sew-Eurodrive GmbH & Co. KG**
**76646 Bruchsal (DE)**

(72) Erfinder:
• **Möhring, Jens**
**76703 Kraichtal (DE)**
• **Nikola, Joachim**
**76703 Kraichtal (DE)**
• **Kemm, Jochen**
**76676 Graben-Neudorf (DE)**

(56) Entgegenhaltungen:
**EP-A- 0 780 967 EP-A- 1 049 243**

**EP 1 225 688 B1**

**Beschreibung**

Die Erfindung betrifft ein Verfahren zur Regelung und einen Umrichter zur Durchführung des Verfahrens.

Aus den Veröffentlichungen

1) "Frequenzumrichter: Prinzip, Aufbau und Einsatz", von Peter F. Brosch, Verlag Moderne Industrie, Landsberg 2000;

2) "Der Drehstrommotor - Ein Lexikon für die Praxis" von Karl Falk; VDI-Verlag GmbH Berlin Offenbach 1997;

3) "Drehzahlveränderbare Antriebe" von Klaus Wolters; VDE-Verlag GmbH Berlin Offenbach 1994;

sind verschiedene Lastkennlinien von Arbeitsmaschinen, sowie Steuerkennlinien von Spannungszwischenkreisumrichtern bekannt, die dem jeweiligen Drehmomenterfordemis angepasst sind.

Üblicherweise wird mittels der bekannten Steuer- und Regel-Verfahren bei Umrichter die Nennerregung und ein möglichst konstanter Hauptfluss im Asynchronmotor unabhängig von der Belastung angestrebt Dies ist Voraussetzung für die Gewährleistung eines möglichst hohen Drehmoments.

Des Weiteren sind dafür auch übliche Kompensationsverfahren wie die lastunabhängige Boost-Kompensation im unteren Drehzahlbereich, sowie die lastabhängige IxR-Kompensation bekannt.

Für Lastkennlinien, die nicht immer das volle Drehmoment erfordem, z.B. bei Pumpen und Lüftern, gibt es Steuerkennlinien, die eine kleinere Spannung vorgeben. Daraus resultiert ein kleineres Drehmoment bei geringerer Magnetisierung.

Den Regelungen des Standes der Technik liegt jeweils eine sogenannte Steuerkennlinie zugrunde, die unterhalb der Eckfrequenz eines Asynchronantriebs eine fest eingestellte Untermagnetisierung erzeugt (oft bezeichnet als Pumpen- und Lüfterkennlinie) eines Antriebes.

Die Eisenverluste und andere Verlustleistungen werden dabei nicht automatisch minimiert, sondern hängen von der Auswahl der Steuerkennlinien ab. In der Praxis ist der Lastfall oftmals nicht genau bekannt.

Aus der EP 1 049 243 A2 ist ein Verfahren zum Zuschalten eines Umrichters bekannt Dort wird also sozusagen eine Fangfunktion ausgeführt und erklärt, wie der Umrichter zugeschaltet werden soll, ohne einen Drehmomentruck beim Zuschalten zu erzeugen. Dabei kann der Motor vor dem Zuschalten in Ruhe sein oder eine Drehzahl aufweisen.

Der Erfindung liegt daher die Aufgabe zugrunde, die Nachteile des Standes der Technik zu vermeiden und bei einem Umrichter-gespeisten Motor in kostengünstiger Weise Energie einzusparen.

Erfindungsgemäß wird die Aufgabe bei dem Verfahren zur Regelung nach den in Anspruch 1 angegebenen Merkmalen und bei dem Umrichter zur Durchführung des Verfahrens nach den in Anspruch 14 angegebenen Merkmalen gelöst.

Wesentliche Merkmale der Erfindung bei dem Verfahren sind, dass es eine Steuer- und Regelschaltung aufweist, wobei kein Winkelsensor oder Drehzahlsensor notwendig ist, und wobei ein an den Klemmen der Statorwicklungen anliegender Statorspannungszeiger $\underline{u}_s$ von der Steuer- und Regelschaltung bestimmt wird, und dass ein von dem durch die Statorwicklungen fließenden Strom ein Statorstromzeiger $\underline{i}_{ist}$ bestimmt wird, wobei im Teillastbetrieb die Spannung so weit abgesenkt wird, insbesondere ohne Verwendung von Winkel- oder Drehzahl-istwerten, dass noch kein Kippen des Motors erfolgt, wobei der Betrag des Statorstroms minimal wird und der Schlupf sich entsprechend ändert..

Von Vorteil ist dabei, dass im Teillastbetrieb, insbesondere auch im Leerlauf, der Betrag des Statorspannungszeigers verringert wird und somit zu einem geringeren Statorstrom führt. Daher werden die Kupferverluste im Stator und die Eisenverluste verringert. Weiterer Vorteil ist also, dass zur Minimierung der Verlustleistungen keine Steuerkennlinien an das jeweilige Lastmoment angepasst werden müssen. Insbesondere bei zeitlich veränderlichen Lastmomenten, wie beispielsweise Transportbändern mit zeitlich veränderlicher Last oder eine wechselnde Anzahl von Menschen auf Rolltreppen oder dergleichen, ist somit eine Anpassung des Stromverbrauchs in einfacher und kostengünstiger Weise ermöglicht Wesentlich ist auch, dass kein Drehwinkel- oder Drehzahlgeber notwendig ist und somit eine sehr kostengünstige Lösung aufgezeigt wird. Weiterer Vorteil ist auch die Geräuschreduzierung des Motors.

Bei einer vorteilhaften Ausgestaltung wird im Teillastbetrieb bei Lastsprüngen das Drehmomentvermögen des Motors durch die Rotorzeitkonstante des Motors bestimmt wird. Von Vorteil ist dabei, dass das Antriebsverhalten weich ist.

Bei einer vorteilhaften Ausgestaltung wird der Betrag des Statorspannungszeigers $\underline{u}_s$ als Spannung derart weit abgesenkt wird, bis der Betrag des Statorstroms $\underline{i}_{ist}$ eine Stromerkennungsgrenze erreicht, die ein Funktional zumindest des zeitlichen Verlaufs des Betrages des Statorstroms $\underline{i}_{ist}$ ist. Insbesondere umfasst das Funktional zumindest einen Integraloperator und/oder stellt zumindest einen Integrierer dar. Von Vorteil ist dabei, dass mit der Stromerkennungsgrenze somit eine Größe zur Verfügung steht, die für die Regelung derart verwendbar ist, dass das Kippen des Motors verhinderbar ist

Bei einer vorteilhaften Ausgestaltung ist der feldbildende Stromanteil id ein weiteres Funktional des Betrag des Statorstroms $\underline{i}_{ist}$. Insbesondere umfasst dieses weitere Funktional zumindest den Integraloperator und/oder stellt zumindest den Integrierer dar. Von Vorteil ist dabei, dass das Schwingverhalten des Motors optimierbar ist und die Schwingneigung vermindert ist.

Bei einer vorteilhaften Ausgestaltung ist der feldbildende Stromanteil id Ausgangsgröße eines Reglers, der als Eingangsgröße den momentbildenden Stromanteil iq oder den Betrag des Statorstromzeiger $\underline{i}_{ist}$ aufweist Von Vorteil ist dabei, dass diese Größen direkt in die Berechnung des Statorspannungszeigers $\underline{u}_s$ eingehen.

Bei einer vorteilhaften Ausgestaltung umfasst der Regler zumindest ein Integrierglied. Von Vorteil ist dabei, dass keine bleibende Regelabweichung vorhanden ist und die Schwingneigung des Motors reduziert ist.

Bei einer vorteilhaften Ausgestaltung weist der Regler im Regelkreis zumindest ein nichtlineares Glied auf. Von Vorteil ist dabei, dass das Verfahren derart ausgestaltbar ist, dass eine Stromerkennungsgrenze mit abnehmender Magnetisierung des Motors mit höherer Progression abnimmt als der feldbildender Stromanteil id, insbesondere quadratisch abnimmt. Somit ist ein äußerst gutes und schnelles Regelverhalten erzielbar, weil das Kippmoment im Wesentlichen proportional zum Quadrat der Spannung ist.

**Bezugszeichenliste:**

| 1 | Netzspannung |
|---|---|
| 2 | Gleichrichter |
| 3 | Wechselrichter |
| 4 | Elektromotor |
| 5 | Steuerschaltung |
| 11 | Stromgrenzkennlinie /% |
| 12 | Stromerkennungsgrenze/% |
| 13 | Stromerkennungsgrenze-Regelung/% |
| 14 | Id/% |
| 15 | Id-Regelung/% |
| 20 | Statorstromzeiger-Berechnung |

Die Erfindung wird nun anhand von Abbildungen näher erläutert:

Fig- 1 zeigt einen Umrichter-gespeisten Motor, wobei über einen Gleichrichter 2 die Netzspannung 1 zu einer Gleichspannung gleichgerichtet, welche dem Wechselrichter 3 als Zwisdienkreisspannung zugeführt wird. Der Motor ist als Drehstrommotor 4 ausgeführt und mit den Ausgangsklemmen des Wechselrichters 3 verbunden. Der Wechselrichter 3 wird durch die Steuerschaltung 5 angesteuert. Der Steuerschaltung 5 wird die gemessene Zwischenkreisspannung zugeführt. Des Weiteren werden mindestens zwei der drei Motorphasenströme erfasst und dem Steuerschaltung 5 zugeführt Bei anderen erfindungsgemäßen Ausführungsbeispielen wird der Strom auf andere Weise erfasst. Innerhalb der Steuerschaltung wird das erfindungsgemäße Regelverfahren ausgeführt, wobei aus den erfassten Motor-

phasenströmen der Statorstromzeiger $\underline{i}_{ist}$, bestimmt, aus dem ein feldbildender Stromanteil id und ein momentbildender Stromanteil iq bestimmt wird, wobei der Betrag des Statorstromzeigers $\sqrt{iq^2 + id^2}$ ist.

Wesentlich ist bei dem erfindungsgemäßen Verfahren, dass im Teillastbetrieb, also bei einem Lastmoment, das kleiner ist als das Nennmoment des Motors, die Spannung derart abgesenkt wird oder ist, dass der Betrag des Statorstroms minimal wird, ohne dass ein Kippen des Motors erfolgt

Somit ist beispielsweise im Leerlauf ein äußerst geringer Stromverbrauch ermöglicht. Andere nützliche Anwendungsfälle liegen beispielsweise beim Antreiben von Transport- oder Förderanlagen, die wechselnde Belastungen aufweisen, wie mit unterschiedlicher Anzahl von Menschen besetzte Rolltreppen oder dergleichen. Der zeitliche Lastverlauf kann also wechseln. Der erfindungsgemäße Antrieb verbraucht dabei bei jeder jeweiligen Last nur äußerst wenig Energie, da die vom Statorstrom verursachten Kupferverluste und die im Wesentlichen von der Statorspannung verursachten Eisenverluste möglichst klein sind.

Der Stellwert des Statorspannungszeigers $\underline{u}_s$ wird bestimmt unter Berücksichtigung der erfassten Zwischenkreisspannung, des feldbildenden Stromanteils id, des momentbildenden Stromanteils iq, der Frequenz und des Schaltzustandes des Wechselrichters.

Für das Erreichen eines unterhalb des Nennmomentes liegenden Drehmomentes, also im Teillastbetrieb, genügt bei dem erfindungsgemäßen Ausführungsbeispiel ein geringerer magnetischer Hauptfluss im Motor.

Beim erfindungsgemäßen Verfahren wird automatisch der Betrag des Statorspannungszeigers $\underline{u}_s$ und der Hauptfluss des Motors soweit absenkt, dass das erforderliche Drehmoment noch gewährleistet werden kann und dabei die Verlustleistungen im Motor verringert werden.

Das erfindungsgemäße Verfahren ermöglicht, dass bei einer Erhöhung des Last-Drehmoments, der Betrag des Statorspannungszeigers $\underline{u}_s$ wieder erhöht wird, und der Hauptfluss im Motor wieder in Richtung seiner Nenndaten zurückgeführt wird. Somit wird ein Kippen des Motors verhindert und die Motorführung gewährleistet.

Der im Teillastbetrieb bis hin zum Leerlauf verringerte Betrag des Statorspannungszeigers führt zu einem geringeren Statorstrom und damit zu geringeren Kupferverlusten und durch den geringeren Magnetisierungsstrom zu geringeren Eisenverlusten.

Das erfindungsgemäße Regelverfahren gewährleistet die volle korrekte Magnetisierung des Motors bei Nennlast. Dabei wird die Ausgangsspannung mit zunehmender Frequenz bis zur Eckfrequenz erhöht.

Beim erfindungsgemäße Regelverfahren werden außerdem Stromgrenzkennlinien 11 berücksichtigt, bei deren Erreichen regelungstechnische Vorgänge eingeleitet werden, wie zumindest das Reduzieren der Frequenz, um ein Kippen des Motors zu verhindern. Solche Stromgrenzkennlinien 11 betragen in einem ersten erfindungsgemäßen Ausführungsbeispiel 150% des Nennwertes für Umrichterstrom. Bei weiteren erfindungsgemäßen Ausführungsbeispielen sind andere Werte realisierbar - je nach Gerätetyp und Motorgröße.

Bei einer erfindungsgemäßen Ausführungsform wird gewährleistet, dass eine Stromerkennungsgrenze 12 definiert wird, die zu Beginn der eingestellten Stromgrenze des Gerätes gleichwertig ist und auf den Wert des Motornennstroms gesetzt ist. Diese Stromerkennungsgrenze 12 wird bei dem erfindungsgemäßen Verfahren mit abnehmender Magnetisierung des Motors derart verändert, dass die Stromerkennungsgrenze 12 mit höherer Progression abnimmt als der feldbildender Stromanteil id. Analog steigt die Stromerkennungsgrenze 12 bei zunehmender Magnetisierung mit höherer Progression als der feldbildender Stromanteil id an.

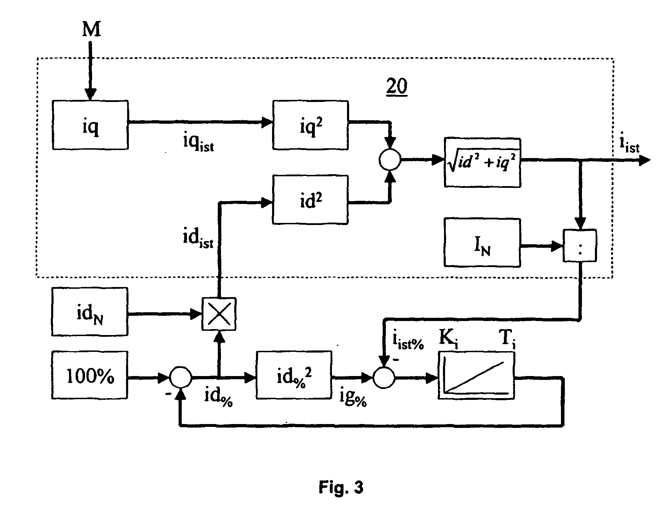

In der Figur 3 ist ein weiteres erfindungsgemäßes Ausführungsbeispiel gezeigt, bei dem der feldbildende Stromanteil id nach Freigabe des Frequenzumrichters zurückführt wird, solange der Betrag des Statorstromzeigers $i_{ist}$ kleiner ist als die beispielhafte Stromerkennungsgrenze 13. Die Stromerkennungsgrenze 12 bleibt unverändert. Die Stromerkennungsgrenze 13 stellt einen beispielhaften Verlauf bei arbeitender Regelung dar und wird je nach Last verändert.

Gleichzeitig wird außerdem die Stromerkennungsgrenze 13 reduziert Die Reduzierung erfolgt dabei derart, dass die Stromerkennungsgrenze 13 unterhalb des Kippstromes des Motors bei entsprechender Untermagnetisierung bleibt.

Der Regler nach Figur 3 befindet sich in einem stabilen Zustand, wenn der Betrag des Statorstromzeigers $\underline{i}_{ist}$ gleich der Stromerkennungsgrenze 13 ist. Bei diesem stabilen Zustand bleibt der feldbildende Stromanteil id konstant.

Wenn dann eine Lastvergrößerung auftritt, wird durch den größeren Schlupf des Asynchronmotors ein größerer Betrag des Statorstromzeigers $i_{ist}$ erzwungen. Der Betrag des Statorstromzeigers $i_{ist}$ wird damit größer als die aktuelle Stromerkennungsgrenze 13. Der Regler umfasst zumindest ein Integrierglied, wobei dieser Integralanteil zu einem höheren Magnetisierungsstrom führt. Somit ist dann auch ein größeres Drehmoment erzeugbar. Gleichzeitig wird die Stromerkennungsgrenze 13 angehoben.

Bei Nennlast liegt dann wieder die volle Magnetisierung vor und die Stromerkennungsgrenze 13 entspricht dem Nennstrom des Motors.

Eine Energieeinsparung ergibt sich im Leerlauf und Teillastbetrieb. Die Regelung verringert indirekt den Statorstrom und somit auch die Kupferverluste der Staturwicklung. Außerdem wird somit auch die Magnetisierung verringert, wodurch sich auch die Eisenverluste verringern. Ein weiterer Vorteil besteht in der Geräuschreduzierung des Antriebes, da die magnetabhängigen Werkstoffe einer geringeren Ummagnetisierung ausgesetzt sind.

Die Anwendung ist nicht nur Pumpen und Lüftern vorbehalten, sondern auch für andere Anwendungen, z.B. Förderbänder mit unterschiedlicher Belastung, nutzbar.

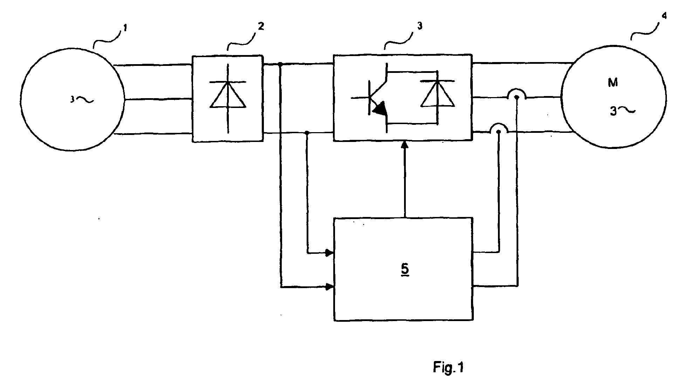

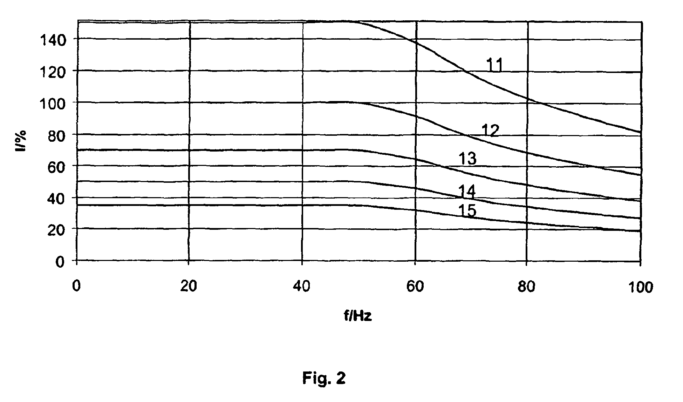

In der Figur 2 ist in einer Prinzipdarstellung eine im Frequenzumrichter hinterlegte Kennlinie der Stromgrenze als Stromgrenzkennlinie 11 dargestellt Sie weist einen Plateaubereich von 0 Hz bis zur Eckfrequenz von 50 Hz auf, wobei sie dort 150% des Nennstromes beträgt Bei anderen erfindungsgemäßen Ausführungsbeispielen weist sie ebenfalls einen Plateaubereich von 0 Nz bis zur Eckfrequenz auf, hat aber einen anderen Wert wie beispielsweise 100% , 120% oder dergleichen. Die Eckfrequenz hat in anderen Ausführungsbeispielen andere Werte.

Die Stromgrenzkennlinie 11 selbst stellt den maximal zulässigen Strom dar und ist unveränderlich und wird von der Regelung nicht beeinflusst.

Die Ausgangsspannung des Umrichters ist zu Beginn so gesteuert, dass die zum Motor gehörige Nennmagnetisierung gewährleistet ist. Gekennzeichnet ist dieser Zustand durch den flussbildenden Anteil des Stromes "Id/%" (14). Die Linie 15 stellt einen beispielhaften Verlauf des flussbildenden Anteils des Stromes Id-Regelung/% (15) dar, der im Teillastbetrieb sich bei der Regelung ergibt. Je nach Last kann dieser Verlauf 15 sich ändem.

Die Stromerkennungsgrenze 12 entspricht im Grundsteuerbereich, also bei Nennmagnetisierung, dem Motor-Nennstrom.

ist der Strom kleiner als der Motornennstrom werden Id und die Stromerkennungsgrenze 13 reduziert. Ein stationärer Zustand stellt sich ein, wenn der tatsächliche Strom der reduzierten Stromerkennungsgrenze 13 entspricht.

Bei zunehmender Last wird durch den größeren Schlupf ein größerer Motorstrom erzwungen. Dieser liegt dann oberhalb der aktuellen Stromerkennungsgrenze 13, und die Regelung führt den Id-Strom und die Stromerkennungsgrenze 13 zurück in Richtung Nennbetrieb.

Im Feldschwächbereich ist die Stromgrenze reduziert, um ein Kippen des Motors zu verhindern.

Alle anderen dargestellten Größen werden im Feldschwächbereich gleichermaßen reduziert.

In der Figur 3 ist die Einbindung der Regelung in ein Betriebssystem eines Frequenzumrichters dargestellt. Der Statorstromzeiger $i_{ist}$ wird innerhalb der Statorstromzeiger-Berechnung 20 aus dem feldbildenden Stromanteil id und dem momentbildenden Stromanteil iq bestimmt, wobei der Betrag des Statorstromzeigers

$\sqrt{iq^2 + id^2}$ beträgt.

100% id entspricht dabei der Motor-Nennmagnetisierung. Die vorgegebene Stromerkennungsgrenze ig (= 13) in Prozent wird in Abhängigkeit von id in Prozent mittels eines nichtlinearen Gliedes errechnet. In dem erfindungsgemäßen Ausführungsbeispiel ist dies ein Quadrierer. In weiteren Ausführungsbeispielen sind auch andere nichtlineare Glieder verwendbar.

Der prozentuale Betrag des Statorstromzeigers $i_{ist}$ wird mit der Stromerkennungsgrenze 13 verglichen und und das Ergebnis einem Proportionalglied und einem Integrierglied zugeführt, wobei aus der Summe der Ausgangsgrößen dieser Glieder der feldbildende Stromanteil id bestimmt wird, indem mit dem Wert 100% verglichen wird.

Das in Figur 3 gezeigt Blockschaltbild zeigt insbesondere, dass der feldbildende Stromanteil id die Differenz von der Summe der Ausgangsgrößen des Integriergliedes und Proportionalgliedes zu einem konstanten Wert (100%) darstellt. Aus diesem feldbildenden Stromanteil id wird mittels Quadrieren die Stromerkennungsgrenze 13 ermittelt. Man kann also auch die Stromerkennungsgrenze 13 als ein Funktional des zeitlichen Verlaufs der Differenz des Betrages des Statorstroms $i_{ist}$ und der Stromerkennungsgrenze 13 auffassen. Somit kann die Stromerkennungsgrenze 13 auch mit einer Funktionalgleichung beschrieben werden.

Die Rotorzeitkonstante beträgt bei industrieüblichen Motoren mit einer Nennleistung von etwa einem oder mehreren kW beispielsweise 100ms bis 600ms. Je nach Art der Ausführung sind auch andere Werte erreichbar. Das erfindungsgemäße Verfahren reagiert auf Lastsprünge in einer im Wesentlichen von dieser Rotorzeitkonstanten bestimmten Zeit. Somit ist für den Teillastbetrieb in einfacher und kostengünstiger Weise ein weiches Antriebsverhalten bei gleichzeitiger Energieeinsparung unter Verhinderung des Kippens des Motors erreicht.

**Patentansprüche**

1. Verfahren zur Regelung bei einem Umrichter-gespeisten Asynchronmotor,
   wobei der Umrichter eine Steuer- und Regelschaltung (5) aufweist
   und wobei kein Winkelsensor oder Drehzahlsensor zur Drehzahlrückführung notwendig ist,
   und wobei ein an den Klemmen der Statorwicklungen anliegender Statorspannungszeiger $\underline{u}_s$ von der Steuer- und Regelschaltung bestimmt wird,
   und dass von dem durch die Statorwicklungen fließenden Strom ein Statorstromzeiger $i_{ist}$ bestimmt wird,
   wobei im Teillastbetrieb die Spannung so welt abgesenkt wird, insbesondere ohne Verwendung von Winkel- oder Drehzahl-Istwerten, dass noch kein Kippen des Motors erfolgt, wobei der Betrag des Statorstroms minimal wird und der Schlupf sich entsprechend ändert.

2. Verfahren nach mindesten einem der vorangegangenen Ansprüche,
   **dadurch gekennzeichnet, dass**
   bei zunehmender Last der Betrag des Statorspannungszeigers $\underline{u}_s$ derart erhöht wird, dass das notwendige Drehmoment des Motors wieder zur Verfügung steht und ein Kippen des Motors vermieden wird.

3. Verfahren nach mindesten einem der vorangegangenen Ansprüche,
   **dadurch gekennzeichnet, dass**
   im Teillastbetrieb bei Lastsprüngen das Drehmomentvermögen des Motors durch die Rotorzeitkonstante des Motors bestimmt wird.

4. Verfahren nach mindesten einem der vorangegangenen Ansprüche,
   **dadurch gekennzeichnet, dass**
   der Betrag des Statorspannungszeigers $\underline{u}_s$ als Spannung derart weit abgesenkt wird, bis der Betrag des Statorstroms $i_{ist}$ eine Stromerkennungsgrenze erreicht,
   wobei die Stromerkennungsgrenze ein Funktional zumindest des **zeitlichen Verlaufs** des Betrages des Statorstroms $i_{ist}$ ist.

5. Verfahren nach mindesten einem der vorangegangenen Ansprüche,
   **dadurch gekennzeichnet, dass**
   das Funktional zumindest einen Integraloperator umfasst und/oder zumindest einen Integrierer darstellt.

6. Verfahren nach mindesten einem der vorangegangenen Ansprüche,
   **dadurch gekennzeichnet dass**
   aus dem Statorstromzeiger $i_{ist}$ ein feldbildender Stromanteil id und ein momentbildender Stromanteil iq bestimmt wird und dass der Betrag des Statorstromzeiger $\sqrt{iq^2 + id^2}$ ist.

7. Verfahren nach mindesten einem der vorangegangenen Ansprüche,
   **dadurch gekennzeichnet, dass**
   der Statorspannungszeiger $\underline{u}_s$ Stellgröße des Umrichters ist und aus feldbildendem Stromanteil id und momentbildendem Stromanteil iq bestimmt wird.

8. Verfahren nach mindesten einem der vorangegangenen Ansprüche,
   **dadurch gekennzeichnet, dass**
   der feldbildende Stromanteil id ein weiteres Funktional des Betrag des Statorstroms $i_{ist}$ ist.

9. Verfahren nach mindesten einem der vorangegangenen Ansprüche,

**dadurch gekennzeichnet, dass**
dieses weitere Funktional zumindest den Integraloperator umfasst und/oder zumindest den Integrierer darstellt

10. Verfahren nach mindesten einem der vorangegangenen Ansprüche,
**dadurch gekennzeichnet, dass**
der feldbildende Stromanteil id Ausgangsgröße eines Reglers ist, der als Eingangsgröße den momentbildenden Stromanteil iq oder den Betrag des Statorstromzeiger $i_{ist}$ aufweist

11. Verfahren nach mindesten einem der vorangegangenen Ansprüche,
**dadurch gekennzeichnet, dass**
der Regler zumindest ein Integerierglied umfasst, dem die Differenz aus einer einer Stromerkennungsgrenze entsprechenden Größe und einer einem feldbildenden Stromanteil id entsprechenden Größe zugeführt wird.

12. Verfahren nach mindesten einem der vorangegangenen Ansprüche,
**dadurch gekennzeichnet, dass**
der Regler im Regelkreis zumindest ein nichtlineares Glied aufweist, mittels dessen eine Stromerkennungsgrenze aus zumindest dem feldbildenden Stromanteil id bestimmt wird.

13. Verfahren nach mindesten einem der vorangegangenen Ansprüche,
**dadurch gekennzeichnet, dass**
das nichtlineare Glied ein Quadrierer ist

14. Umrichter zur Durchführung des Verfahrens nach mindesten einem der vorangegangenen Ansprüche,
**dadurch gekennzeichnet, dass**
der Umrichter Mittel zur Erfassung zumindest eines Wertes für Strom, Mittel zur Erfassung der Zwischenkreisspannung und eine derart ausgeführte Steuer- und Regelschaltung (5) aufweist, dass im Teillastbetrieb die Spannung so weit abgesenkt wird, insbesondere ohne Verwendung von Winkel- oder Drehzahl-istwerten, dass noch kein Kippen des Motors erfolgt, wobei der Betrag des Statorstroms minimal wird und der Schlupf sich entsprechend ändert,
wobei im Teillastbetrieb bei Lastsprüngen das Drehmomentvermögen des Motors durch die Rotorzeitkonstante des Motors bestimmt Ist.

**Claims**

1. A regulating method with respect to a converter-fed asynchronous motor,
wherein the converter has a control and regulating circuit (5)
and wherein no angle sensor or speed sensor for feeding back the rotational speed is necessary,
and wherein a stator voltage vector $u_s$, applying at the terminals of the stator windings is determined by the control and regulating circuit,
and in that a stator current vector $i_{actual}$ is determined by the current flowing through the stator windings, wherein in partial load operation the voltage is lowered to such an extent, particularly without the use of angle or speed actual values, that breakdown of the motor still does not occur, wherein the value of the stator current becomes minimal and the slip changes accordingly.

2. A method according to at least one of the preceding Claims,
**characterised in that**
with increasing load, the value of the stator voltage vector $u_s$ is increased such that the necessary torque of the motor is again available and breakdown of the motor is avoided.

3. A method according to at least one of the preceding Claims,
**characterised in that**
in partial load operation, at sudden load variations the torque capacity of the motor is determined by the rotor time constant of the motor.

4. A method according to at least one of the preceding Claims,
**characterised in that**
the value of the stator voltage vector $u_s$ as the voltage is lowered so far until the value of the stator current $i_{actual}$ reaches a current detection limit,
wherein the current detection limit is a composite function at least of the **variation with time** of the value of the stator current $i_{actual}$.

5. A method according to at least one of the preceding Claims,
**characterised in that**
the composite function includes at least one integral operator and/or represents at least one integrator.

6. A method according to at least one of the preceding Claims,
**characterised in that**
a field-producing current component id and a torque-producing current component iq are determined from the stator current vector $i_{actual}$ and **in that** the value of the stator current vector is $\sqrt{iq^2 + id^2}$ .

7. A method according to at least one of the preceding Claims,

**characterised in that**

the stator voltage vector $\underline{u}_s$ is an adjusted variable of the converter and is determined from the field-producing current component id and the torque-producing current component iq.

8. A method according to at least one of the preceding Claims,
**characterised in that**
the field-producing current component id is a further composite function of the value of the stator current $\underline{i}_{actual}$.

9. A method according to at least one of the preceding Claims,
**characterised in that**
this further composite function includes at least the integral operator and/or represents at least the integrator.

10. A method according to at least one of the preceding Claims,
**characterised in that**
the field-producing current component id is the output variable of a regulator which has as input variable the torque-producing current component iq or the value of the stator current vector $\underline{i}_{actual}$.

11. A method according to at least one of the preceding Claims,
**characterised in that**
the regulator comprises at least one integrator element to which is supplied the difference of a variable corresponding to the current detection limit and a variable corresponding to a field-producing current component id.

12. A method according to at least one of the preceding Claims,
**characterised in that**
the regulator has in the regulating system at least one non-linear element, by means of which a current detection limit is determined from at least the field-producing current component id.

13. A method according to at least one of the preceding Claims,
**characterised in that**
the non-linear element is a squarer.

14. A converter for implementing the method according to at least one of the preceding Claims,
**characterised in that**
the converter has means for detecting at least one value for current, means for detecting the d.c. link voltage and a control and regulating circuit (5) implemented such that in partial load operation the voltage is lowered to such an extent, particularly without the use of angle or speed actual values, that breakdown of the motor still does not occur, wherein the value of the stator current becomes minimal and the slip changes accordingly,

wherein in partial load operation, at sudden load changes the torque capacity of the motor is determined by the rotor time constant of the motor.

**Revendications**

1. Procédé de régulation d'un moteur asynchrone alimenté par un convertisseur,
selon lequel le convertisseur présente un circuit de commande et de régulation (5),
selon lequel aucun capteur d'angle ou capteur de vitesse de rotation pour le retour de la vitesse de rotation n'est nécessaire,
selon lequel un indicateur de tension de stator $\underline{u}_s$ présent aux bornes des enroulements de stator est déterminé par le circuit de commande et de régulation,
et selon lequel on détermine un indicateur de courant de stator $\underline{i}_{ist}$ du courant circulant à travers les enroulements de stator,
la tension étant abaissée à charge partielle, en particulier sans utiliser de valeurs réelles d'angle ou de vitesse de rotation, jusqu'à un point où il ne se produit pas encore de décrochage du moteur, la valeur du courant de stator devenant minimale et le glissement changeant en conséquence.

2. Procédé selon au moins l'une des revendications précédentes,
**caractérisé par le fait que**
lorsque la charge augmente, la valeur de l'indicateur de tension de stator $\underline{u}_s$ est élevée de telle manière que le couple nécessaire du moteur soit de nouveau disponible et que l'on évite un décrochage du moteur.

3. Procédé selon au moins l'une des revendications précédentes,
**caractérisé par le fait que**
la capacité de couple du moteur est déterminée par la constante de temps du rotor en cas de sauts de charge à charge partielle.

4. Procédé selon au moins l'une des revendications précédentes,
**caractérisé par le fait que**
la valeur de l'indicateur de tension de stator $\underline{u}_s$ en tension est abaissée jusqu'à ce que la valeur du courant de stator $\underline{i}_{ist}$ atteigne une limite de détection de courant qui est une fonctionnelle au moins de la variation dans le temps de la valeur du courant de stator $\underline{i}_{ist}$

**5.** Procédé selon au moins l'une des revendications précédentes,
**caractérisé par le fait que**
la fonctionnelle comprend au moins un opérateur d'intégration et/ou constitue au moins un intégrateur.

**6.** Procédé selon au moins l'une des revendications précédentes,
**caractérisé par le fait que**
l'on détermine à partir de l'indicateur de courant de stator $\underline{i}_{ist}$ une composante de courant produisant le champ id et une composante de courant produisant le couple iq et que la valeur de l'indicateur de courant de stator est $\sqrt{iq^2 + id^2}$ .

**7.** Procédé selon au moins l'une des revendications précédentes,
**caractérisé par le fait que**
l'indicateur de tension de stator $\underline{u}_s$ est une grandeur de réglage du convertisseur et est déterminé à partir de la composante de courant produisant le champ id et de la composante de courant produisant le couple iq.

**8.** Procédé selon au moins l'une des revendications précédentes,
**caractérisé par le fait que**
la composante de courant produisant le champ id est une autre fonctionnelle de la valeur du courant de stator $\underline{i}_{ist}$.

**9.** Procédé selon au moins l'une des revendications précédentes,
**caractérisé par le fait que**
cette autre fonctionnelle comprend en particulier au moins l'opérateur d'intégration et/ou constitue au moins l'intégrateur.

**10.** Procédé selon au moins l'une des revendications précédentes,
**caractérisé par le fait que**
la composante de courant produisant le champ id est la grandeur de sortie d'un régulateur qui présente comme grandeur d'entrée la composante de courant produisant le couple iq ou la valeur de l'indicateur de courant de stator $\underline{i}_{ist}$.

**11.** Procédé selon au moins l'une des revendications précédentes,
**caractérisé par le fait que**
le régulateur comprend au moins un élément intégrateur auquel on amène la différence entre une grandeur correspondant à une limite de détection de courant et une grandeur correspondant à une composante de courant produisant le champ id.

**12.** Procédé selon au moins l'une des revendications précédentes,
**caractérisé par le fait que**
le régulateur présente dans le circuit de régulation au moins un élément non linéaire au moyen duquel on détermine une limite de détection de courant à partir d'au moins la composante de courant produisant le champ id.

**13.** Procédé selon au moins l'une des revendications précédentes,
**caractérisé par le fait que**
l'élément non linéaire est un élément d'élévation au carré.

**14.** Convertisseur pour réaliser le procédé selon au moins l'une des revendications précédentes,
**caractérisé par le fait que**
le convertisseur présente des moyens pour saisir au moins une valeur pour le courant, des moyens pour saisir la tension de circuit intermédiaire et un circuit de commande et de régulation (5) réalisé de telle manière que la tension est abaissée à charge partielle, en particulier sans utiliser de valeurs réelles d'angle ou de vitesse de rotation, jusqu'à un point où il ne se produit pas encore de décrochage du moteur, la valeur du courant de stator devenant minimale et le glissement changeant en conséquence, la capacité de couple du moteur étant déterminée par la constante de temps du rotor en cas de sauts de charge à charge partielle.

Fig. 1

Fig. 2

**Fig. 3**